# EUROPEAN PATENT APPLICATION

(11) **EP 0 673 803 A1**
(43) Date of publication of application: **27.09.1995**
(21) Application number: 95103324.0
(22) Date of filing: 08.03.1995
(51) Int. Cl.: B60R 9/045, F16B 7/04

(54) **Quick coupling device for fixing accessories in general to the roof-rack rails of a motor vehicle and the like**

(30) Priority: 18.03.1994 IT MI940515
(71) Applicant: FABBRI S.r.l., I-25040 Bornato - Cazzago san Martino (IT)
(72) Inventor: Fabbri Corsarini, Luciano, I-25017 Lonato (Province of Brescia) (IT)
(74) Representative: Modiano, Guido, Dr.-Ing.

(57) **Abstract**

A quick coupling device for fixing accessories in general to the roof-rack rails of a motor vehicle and the like, including a coupling element (1) that is rotatably supported by a portion (4) that is rigidly coupled to the accessory (5) to be fixed. This portion (4) forms, laterally to the coupling element (1), slots (10) for inserting the ends of the arms (11) of a U-shaped part (12) that can be coupled to a roof-rack rail (14). The arms (11) form openings (20) in which the ends of the coupling element (1) can be removably inserted by turning.

## Description

The present invention relates to a quick coupling device for fixing accessories in general to the roof-rack rails of a motor vehicle and the like.

It is known that accessories in general, such as for example bicycle holders, ski racks, boat racks, luggage racks, and so forth, are currently fixed to the roof-rack rails of motor vehicles by means of U-bolts constituted by a metal rod bent in the shape of the letter U which end with a threaded portion with which a locking nut engages. In practice, the U-bolt surrounds the roof-rack rail and the coupling of the accessory becomes stable by tightening the nuts.

Although this type of coupling is used extensively, it has the drawback that a long time is required for fixing, since it is necessary to tighten a relatively large number of nuts during assembly and to loosen the same number during disassembly.

An aim of the invention is indeed to eliminate the drawbacks described above by providing a quick coupling device for fixing accessories in general to roof-rack rails that allows to couple the accessory to the rails in an extremely short time, eliminating the use of screw means.

Within the scope of this aim, a particular object of the invention is to provide a quick coupling device that can be fixed quickly and precisely with no possibility of making mistakes in the tightening force of the various couplings.

Another object of the present invention is to provide a quick coupling device which, by virtue of its particular constructive characteristics, is capable of giving the greatest assurances of reliability and safety in use.

A further object of the present invention is to provide a quick coupling device that can be easily obtained starting from commonly commercially available elements and materials and is furthermore competitive from a merely economical point of view.

This aim, these objects, and others which will become apparent hereinafter are achieved by a quick coupling device for fixing accessories in general to the roof-rack rails of a motor vehicle and the like, according to the invention, characterized in that it comprises a coupling element that is rotatably supported by a portion that is rigidly coupled to the accessory to be fixed, said portion forming, laterally to said coupling element, slots for inserting the ends of the arms of a U-shaped part that can be coupled to a roof-rack rail, said arms forming openings in which the ends of said coupling element can be removably inserted by turning.

Further characteristics and advantages will become apparent from the following detailed description of a preferred but not exclusive embodiment of a quick coupling device for fixing accessories in general to the roof-rack rails of a motor vehicle and the like, illustrated only by way of non-limitative example in the accompanying drawings, wherein:

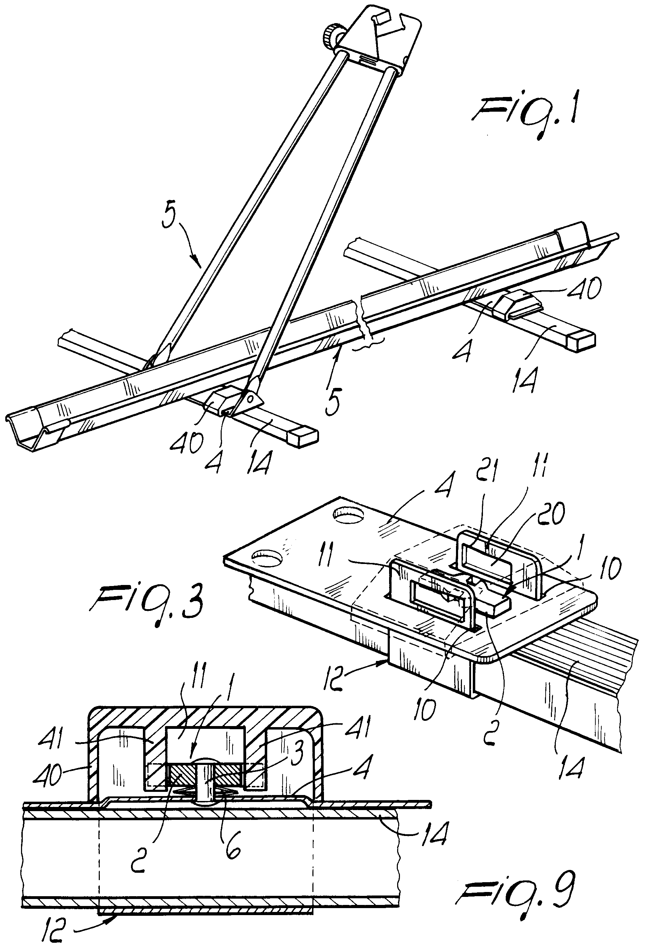

figure 1 is a schematic view of the quick coupling device according to the invention, for fixing for example a bicycle rack;

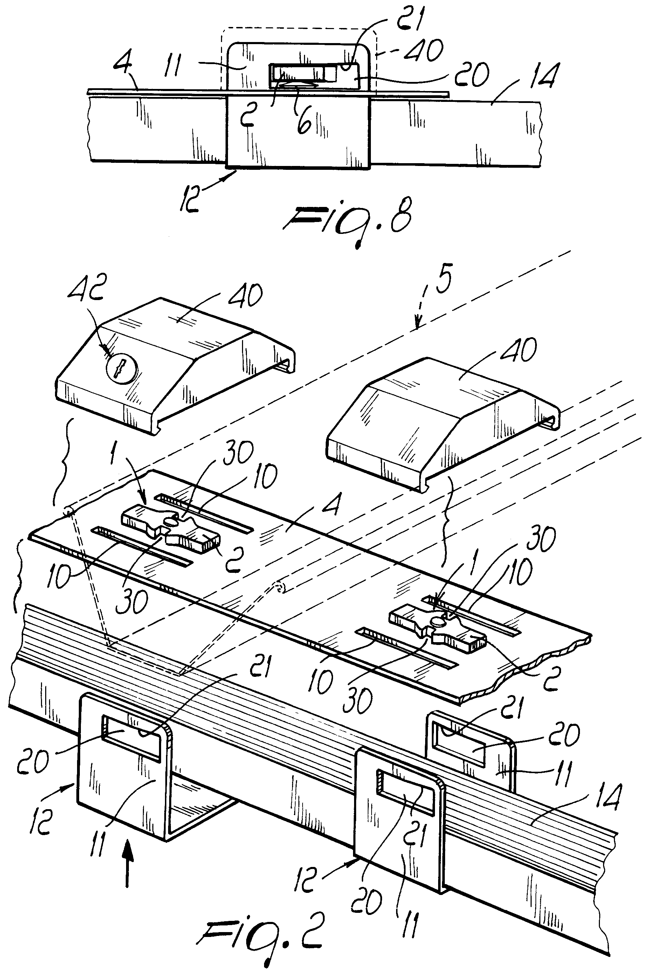

figure 2 is an exploded perspective view of the quick coupling device;
figure 3 is a perspective view of the quick coupling device in open position;

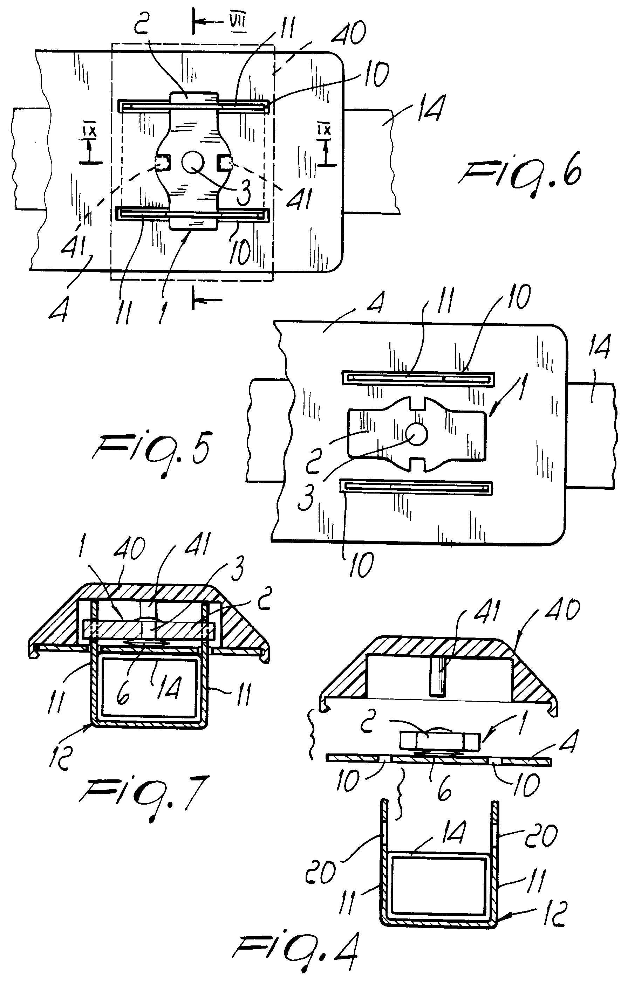

figure 4 is an exploded elevation view of the quick coupling device;
figure 5 is a plan view of the quick coupling device in open position;
figure 6 is a plan view of the quick coupling device in closed position;
figure 7 is a sectional view, taken along the plane VII-VII of figure 6;
figure 8 is a front elevation view of the quick coupling device in closed position;
figure 9 is a sectional view, taken along the plane IX-IX of figure 6.

With reference to the above figures, the quick coupling device for fixing accessories in general to the roof-rack rails of a motor vehicle and the like, according to the invention, comprises a coupling element 1 which is advantageously constituted by an elongated flat strip 2 connected to a pivot 3 that is rotatably supported by a portion 4 formed by the accessory to be coupled, which is generally designated by the reference numeral 5 and can be constituted by a bicycle rack, a ski rack, a rooftop boat holder, a luggage rack, and so forth.

Advantageously, between the flat strip 2 and the portion 4 there are Belleville spring washers 6 that keep the flat strip 2 spaced from the portion 4, so as to avoid friction and ensure constant locking.

Slots 10 are formed on the portion 4, which can be constituted directly by a part of the accessory 5 or by an element that is rigidly coupled laterally to the accessory 5; said slots are arranged laterally to the coupling element constituted by the flat strip 2, and the distance between them is shorter than the longer dimension of the flat strip 2 and longer than the shorter dimension of said flat strip 2.

Advantageously U-shaped straddling elements 12 can be coupled to the roof-rack rails 14 and have arms 11 that can be inserted in the slots 10.

The arms 11 have, in their portion that protrudes beyond the rails 14, openings 20 in which the longitudinal ends of the flat strip 2 can be removably inserted by turning in order to perform locking.

Advantageously, the upper edge of the openings 20 has an inclined portion 21, so as to produce a further tightening action during coupling to the flat strip 2.

It should also be noted that it is possible to provide shims in order to adapt to possible different thickness of the rails 14.

The flat strip 2 forms, in a median region, elements for coupling to a rotation tool; said elements are advantageously constituted by oppositely arranged recesses 30 that can be engaged by the points of a suitable tool so as to perform rotation.

Furthermore, in order to prevent any vibrations from turning the flat strip and disengaging it from the openings 20 during the motion of the motor vehicle, there are protection caps, designated by the reference numeral 40, which hide the flat strip from view and are provided with pins 41 that fit in the recesses 40, thus preventing rotation.

The caps 40 can be provided with a cylinder lock 42 to act as anti-theft device.

In practical operation, the quick coupling device allows to perform coupling and uncoupling simply by turning the flat strip 2 through 90^{o} in one direction or the other, engaging it or disengaging it with respect to the openings 20, without thus having to resort to screw-based coupling means.

Fixing is furthermore extremely stable, since rotation of the flat strip 2 is prevented by the cap 40 which cannot be applied if the flat strip has not been rotated into the correct position, thus constituting an additional safety element.

The invention thus conceived is susceptible of numerous modifications and variations, all of which are within the scope of the inventive concept.

All the details may furthermore be replaced with other technically equivalent elements.

In practice, the materials employed, so long as they are compatible with the specific purpose, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Quick coupling device for fixing accessories in general to the roof-rack rails of a motor vehicle and the like, characterized in that it comprises a coupling element (1) that is rotatably supported by a portion (4) that is rigidly coupled to the accessory (5) to be fixed, said portion (4) forming, laterally to said coupling element (1), slots (10) for inserting the ends of the arms (11) of a U-shaped part (12) that can be coupled to a roof-rack rail (14), said arms (11) forming openings (20) in which the ends of said coupling element (1) can be removably inserted by turning.

2. Quick coupling device according to claim 1, characterized in that said coupling element (1) comprises an elongated flat strip (2) whose longer dimension is greater than the distance between said slots (10) and whose shorter dimension is shorter than the distance between said slots (10).

3. Quick coupling device according to the preceding claims, characterized in that said flat strip (2) is connected to a pivot (3) which is rotatably supported by said portion (4).

4. Quick coupling device according to one or more of the preceding claims, characterized in that it comprises Belleville spring washers (6) interposed between said flat strip (2) and said portion (4).

5. Quick coupling device according to one or more of the preceding claims, characterized in that said openings (20) formed at the ends of said arms (11) of said U-shaped part (12) have at least one inclined portion (21) to apply a tightening action to said U-shaped part (12) on said roof-rack rail (14) when coupled to said flat strip (2).

6. Quick coupling device according to one or more of the preceding claims, characterized in that it comprises, on said flat strip (2), diametrically arranged recesses (30) for engaging a turning tool.

7. Quick coupling device according to one or more of the preceding claims, characterized in that it comprises a cap (40) for covering said quick coupling device, said covering cap (40) being provided with pins (41) that can be inserted in said recesses (30) to prevent the rotation of said flat strip (2).

8. Quick coupling device according to one or more of the preceding claims, characterized in that it comprises lock means (42) provided on said cap (40) so as to form an anti-theft element.
